Europäisches Patentamt

European Patent Office

Office européen des brevets

(19)

(11) Publication number: **0 089 427**

A1

(12) **EUROPEAN PATENT APPLICATION**

(21) Application number: **82301447.7**

(22) Date of filing: **19.03.82**

(51) Int. Cl.³: **H 01 M 4/76**

(43) Date of publication of application:
28.09.83 Bulletin 83/39

(84) Designated Contracting States:
AT BE CH DE FR GB IT LI LU NL SE

(71) Applicant: KOEHLER MANUFACTURING COMPANY
123 Felton Street Box R
Marlborough Massachusetts 01752(US)

(72) Inventor: Guimond, Roy A.
62 Montana Drive
Holden Massachusetts 01520(US)

(72) Inventor: Gulliksen, John Eric
19 Fox Hill Road
Shrewsbury Massachusetts 01545(US)

(72) Inventor: Reed, Nanci
308 Concord Avenue
Sudbury Massachusetts 01776(US)

(74) Representative: Haggart, John Pawson et al,
Page, White & Farrer 5 Plough Place New Fetter Lane
London EC4A EC4(GB)

(54) A tubular positive plate for use in a lead-acid storage battery.

(57) A tubular positive electrode for use in a lead-acid storage battery includes a grid structure consisting of a top bar (4), a lug (6) extending upwardly from the top bar, and spines (8) extending downwardly. A plastic grid complement has spaced-apart angularly displaceable side portions (28, 30) which register with shaped surfaces of the grid structure when the grid complement snaps around the top bar. Tubes containing active material are forced over the ends of those angularly displaceable side portions. Current flow is forced through the spines and the active material.

Fig.12.

EP 0 089 427 A1

/\

## A TUBULAR POSITIVE PLATE FOR USE IN A

## LEAD-ACID STORAGE BATTERY

This invention relates to tubular positive plates for use in a lead-acid storage battery, a battery including such plates, a method of assembling such plates, and a method of operating the lead-acid storage battery so produced.

In operating a conventional lead-acid battery periodic "cycling" including charging and discharging is customarily carried out. A standard charging procedure is to continue charging until the battery has been overcharged to some extent. For example, the battery may have a rated discharge capacity expressed in terms of ampere-hours and may be overcharged to 115% of such capacity. Under these conditions an appreciable amount of the charging current may be dissipated or wasted in an undesirable fashion with an energy loss taking place.

Similarly, in a battery being discharged there may occur undesirable paths of current flow causing a wastage of energy. This unnecessary dissipation of energy should be minimized.

During periods when a battery may be required to be on "standby" it is customary to maintain the battery at a desired state of charge. This is ordinarily accomplished by "trickle charging", during which a further unwanted dissipation of energy may occur.

Because of rising energy costs there exists a definite need for improvements in efficiency in the operation of lead-acid batteries.

The invention provides a lead-acid battery in which energy conservation is realized by a reduction in self discharge rate as a result of which the shelf life of the battery is substantially extended, and by reducing the magnitude of required maintenance charge currents.

According to the invention there is provided a tubular positive electrode for use in a lead-acid storage battery, including a grid structure consisting of a top bar, a lug portion extending from one side of the top bar and spaced-apart spine portions extending from an opposite side thereof, tubes locating active material around the spines, and a plastic grid complement selectively enclosing portions of the grid structure, characterised in that the top bar has shaped spaced-apart surfaces of a predetermined configuration, and the grid complement is formed with spaced-apart angularly displaceable side portions which are selectively self-registering with the predetermined shaped surfaces of the grid structure when the grid complement is assembled on the top bar.

The invention also comprehends a method of assembling a tubular positive plate, characterised by first inserting the lug of the grid structure into the lug enclosure portion of the grid complement with initial angular displacement of the side portions occurring, thereafter advancing the said grid structure into the grid complement to further angularly displace the said side wall portions, then advancing and engaging the top bar against the top bar enclosure into a position in which the said angularly displaceable side portions revert into self-registering relationship with the shaped portions of the top bar lying between the spines, thereafter distensibly fitting the tube means over the outer sides of the tube engaging surfaces, and finally advancing the tube means into contact with the side portions of the grid complement.

The invention also includes a lead-acid storage battery having tubular positive electrodes as defined above, separated from negative electrodes by separators.

-2-

Also the invention provides a method of operating a lead-acid battery which embodies the tubular positive electrodes as defined above, in which active material is located around the current carrying means within the tubes and the grid complement member characterised in that an electrical current of a required initial value is first caused to flow through the electrodes, separators and electrolyte, and the current is then directed through enclosed grid portions of the positive electrode along guided paths of travel in which current flow along paths which bypass the positive active material is restricted, and thereafter the flow of current, the value of which may vary, is conducted through the active material of the positive electrode in an energy conserving manner.

Some embodiments of the invention will now be described, by way of example, with reference to the accompanying drawings in which:-

Figure 1 is a perspective view, partially broken away, of one cell of a lead-acid storage battery embodying tubular positive electrodes according to the invention,

Figure 2 is a perspective view of a tubular positive electrode according to the invention,

Figure 3 is a front elevation of portions of the grid structure of the electrode of Figure 2,

Figure 4 is a perspective view of a grid complement which forms part of the electrode of Figure 2,

Figure 5 is a plan view of the grid complement of Figure 4,

Figure 6 is an end elevation of the grid complement of Figure 4,

Figure 7 is an opposite end elevation of the grid complement of Figure 4,

Figure 8 is a cross-section taken on the line VIII-VIII of Figure 5,

Figure 9 is a cross-section taken on the line IX-IX of Figure 5,

Figure 10 is a part sectional view illustrating a first step in the assembly of the electrode of Figure 1,

-3-

4

Figure 11 is a view similar to Figure 10 showing further advancement of the grid structure into the grid complement,

Figure 12 is a view similar to Figure 10, but showing surfaces of the grid complement in final self-registered relationship with the grid structure,

Figure 13 is an end elevational view, partially broken away, of the grid complement assembled on the grid structure,

Figure 14 illustrates diagrammatically a final step in assembly of tubes on to the grid and grid complement assembly,

Figure 15 is a cross-sectional view taken on the line XV-XV of Figure 2,

Figure 16 is a diagrammatic view illustrating an electrical circuit analogue of a battery of the invention during charging,

Figure 17 is a diagrammatic view showing paths of electrical current flow through a conventional tubular positive electrode,

Figure 18 is a view similar to Figure 17, but illustrating electrical current flow through a tubular positive electrode of the invention,

Figure 19 is a graphical representation contrasting charging characteristics of a conventional battery and a battery of the invention,

Figure 20 is a diagrammatic view similar to Figure 16 but illustrating the battery during self-discharge,

Figure 21 is a diagrammatic view similar to Figure 16 but illustrating the battery discharging through a load, and

Figure 22 is an exploded view of parts of a modified form of tubular positive electrode of the invention.

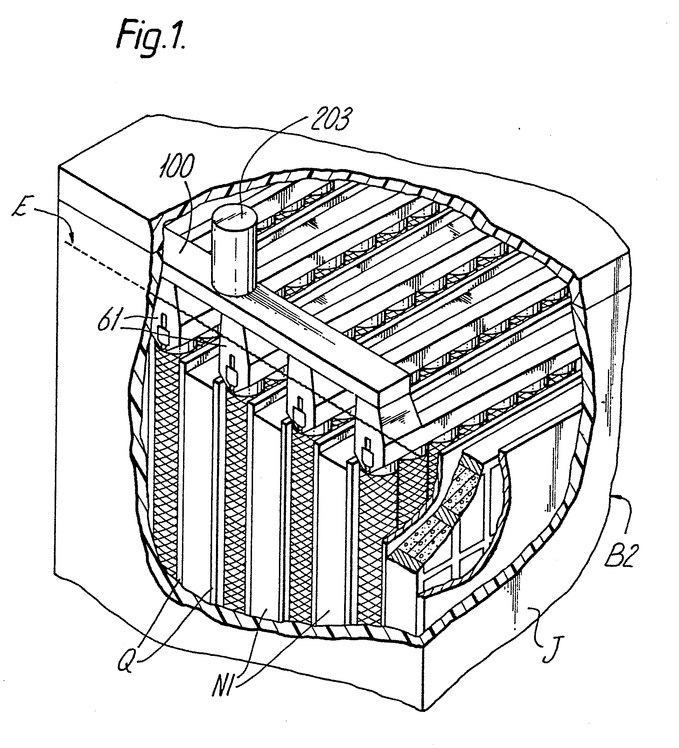

Figure 1 illustrates one cell, B2, of a lead-acid storage battery, which includes a jar J which contains a body of electrolyte whose upper level is denoted by arrow E. Immersed in the electrolyte are tubular positive electrodes of the invention, which are supported in the cell together with negative electrodes N1 and intervening separators Q. The positive electrodes are interconnected by means of a lead bridge 100 having a positive terminal 203.

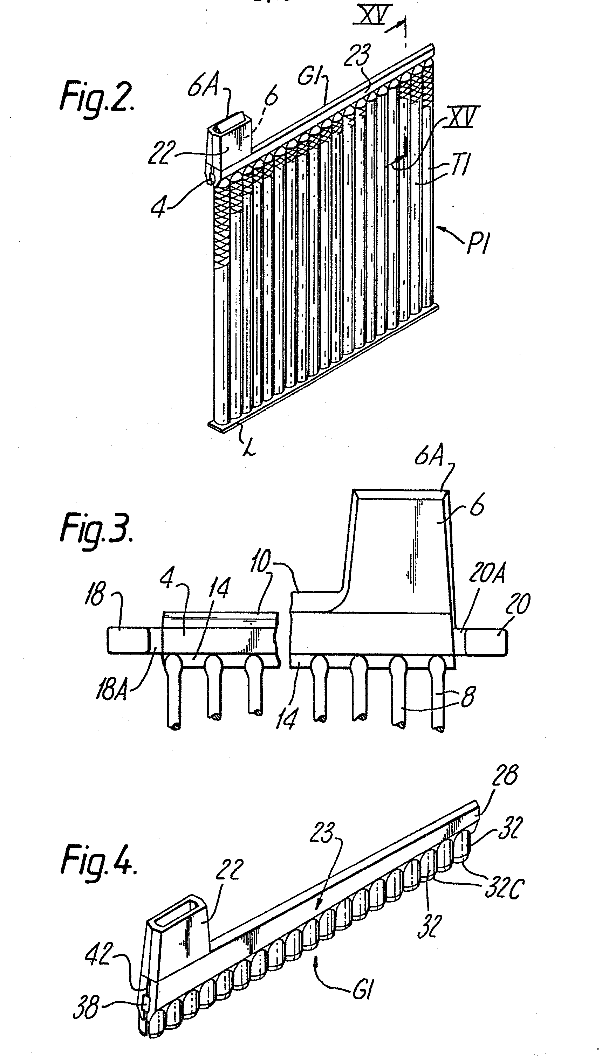

In Figure 2 one of the tubular positive electrodes P1 is shown, and includes a shaped grid structure and a self-registering grid complement G1 together with tubes T1 in which active material is contained. A bottom Bar L is engaged in the lower ends of the tubes. The shaped grid structure is shown partly in Figure 3, and comprises a lug 6, a top bar 4 and depending spines 8 extending downwardly from the top bar. The lug 6 is extended to provide a portion 6A which, after assembly, will project from the grid complement G1 to facilitate interconnection of positive electrodes by the bridge 100.

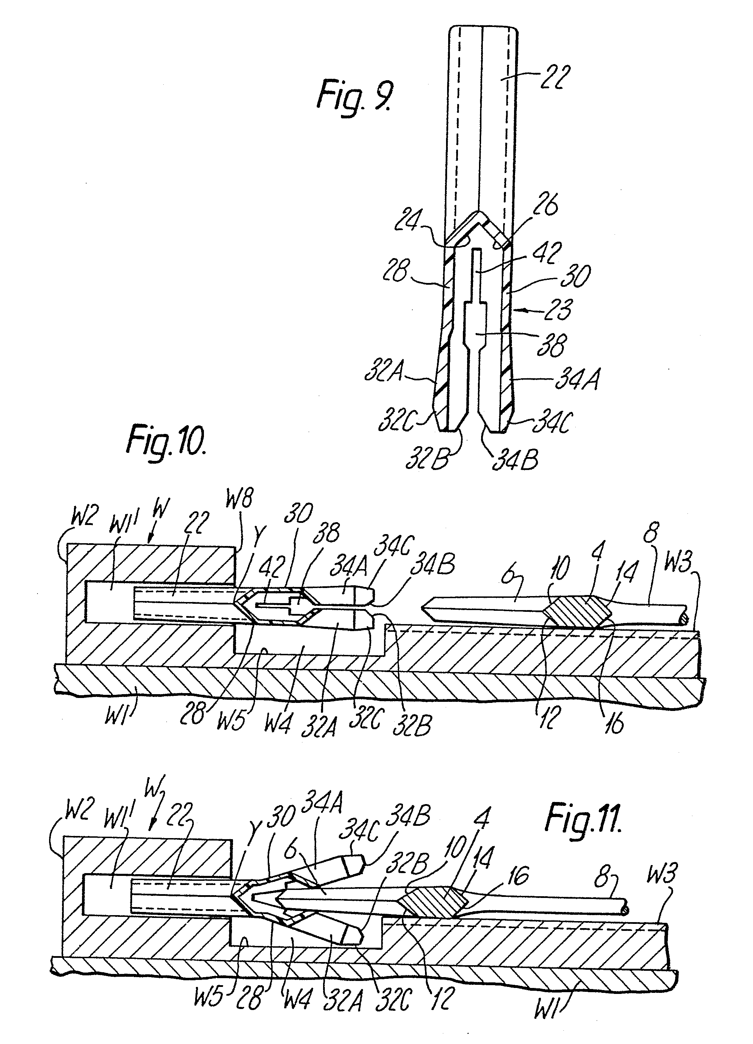

As shown in Figures 3 and 10, the top bar 4 is constructed with shaped surfaces 10, 12, 14 and 16 of predetermined configuration which provide converging flat surfaces at the top and bottom sides of the top bar. The ends of the top bar 4 have breakaway disposable hanger parts 18 and 20 whose purpose is described later.

The spines 8 have cross-sectional areas which increase in size as they merge with the top bar. These increased cross-sectional areas provide an increased current carrying mass of lead and also improve the corrosion resistance of the spines at these portions.

The self-registering grid complement structure G1 is illustrated in detail in Figures 4 to 9, and includes a lug enclosure portion 22, a top bar enclosure portion 23 which is formed with upper shaped inner surfaces 24 and 26 of a predetermined converging angular configuration, and with self-registering similarly angled lower inner surfaces 28A and 30A which meet with angularly displaceable side portions 28 and 30.

When the side portions 28 and 30 are in their normally undisplaced positions, surfaces 28A and 30A become firmly engaged against surfaces 14 and 16 of the top bar 4 lying between the spines 8. In addition, the side portions 28 and 30 are extended to provide a plurality of opposing spaced apart tube retaining portions 32 and 34 having tapered extremities 32A and 34A, and which are formed with lower inner diverging surfaces 32B and 34B and with lower outer

6

inclined surface portions 32C and 34C for facilitating tube engagement.

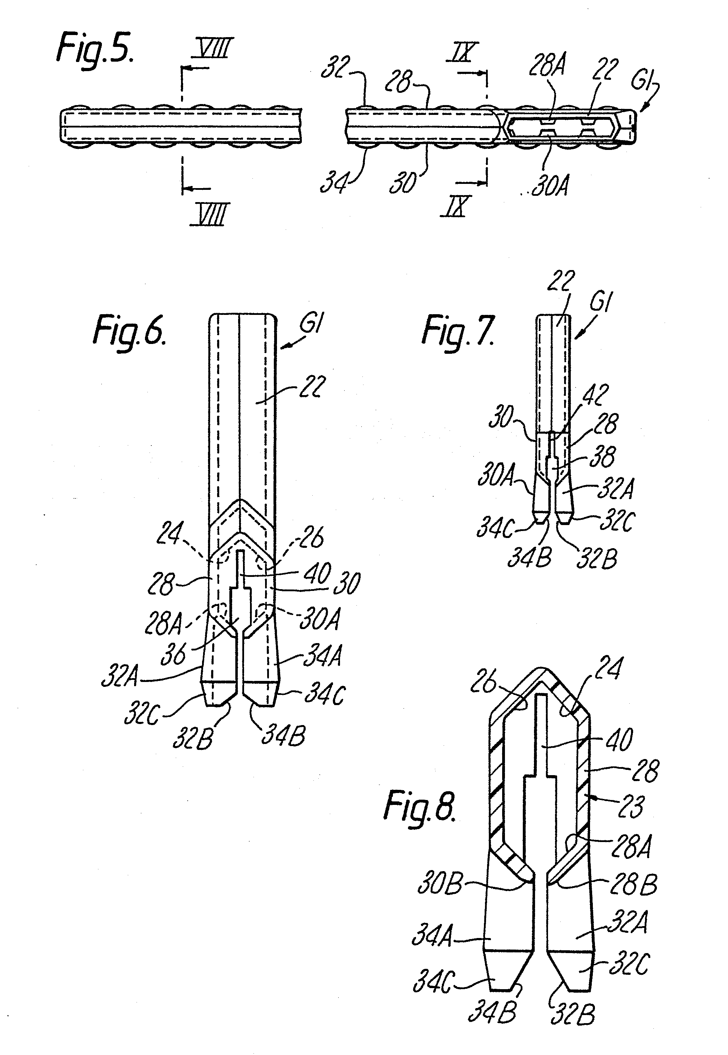

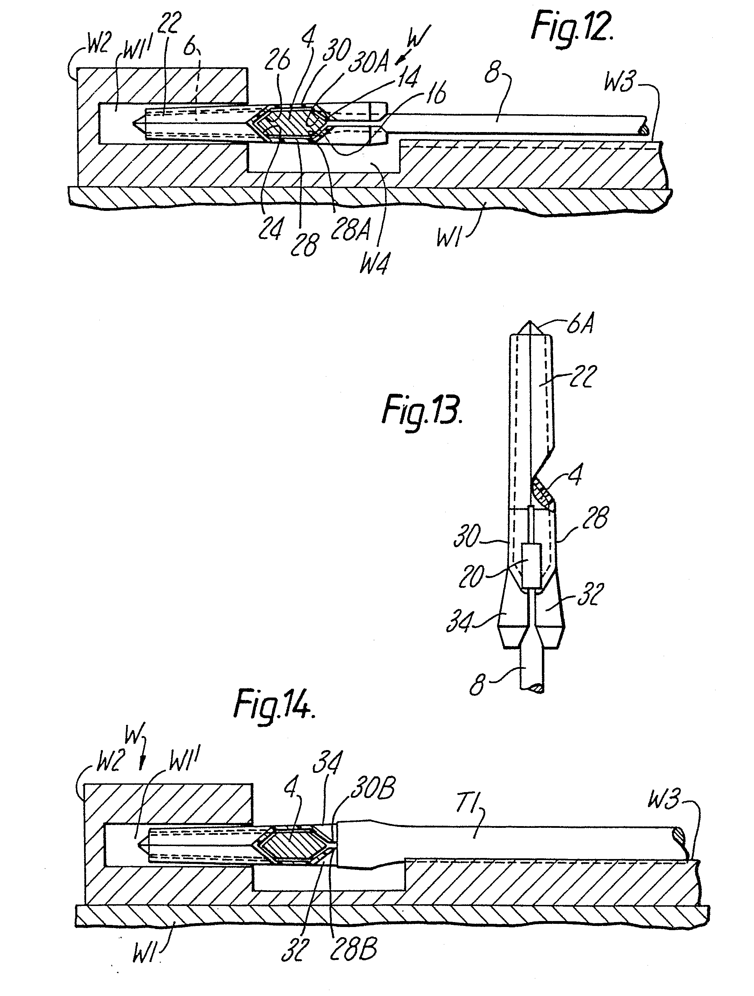

At opposite ends of the grid complement, as most clearly shown in Figures 6 and 7, are provided holes 36 and 38 through which pass the disposable grid hanger portions 18 and 20 of the grid structure. These holes 36 and 38 are extended to form slits 40 and 42 which are operative to facilitate angular flexing of the side wall portions 28 and 30 in the manner suggested in Figure 11.

Figures 10, 11 and 12 illustrate assembly of a grid structure in a grid complement, which is carried out in two assembly successive steps as follows:-

(a)  positioning a grid complement in the assembly apparatus; and

(b)  inserting the grid structure within the grid complement.

The assembly apparatus is a flat bed structure positioned on the upper side of a suitable base W1 which may be a bench or table.

The flat bed structure is formed along one end with a grid complement holder part W2 which has a retainer slot W1'. At its opposite end, the flat bed structure is formed with a horizontally extending fluted slide surface W3, and an intermediate portion of the bed structure is recessed to provide a clearance channel W4 defined by a relieved surface W5.

Positioning of the grid complement G1 in the flat bed structure is carried out by first inserting a lug enclosure portion 22 of grid complement G1 in retainer slot W1'. An upper V-shaped edge Y of the grid complement G1 moves into abutting relation with an inner face W8 of the holder portion W1 so that further insertion of the lug enclosure portion 22 is prevented. The side portion 28 of the grid complement extends across the channel W4 and is spaced above the lower surface W5 of the channel W4. Thus the side 28 is free to be displaced downwardly, as shown in Figure 11.

-6-

A grid structure rests on the upper slide surface W3 of the flat bed W, and is moved along the fluted slide surface W3 into a position in which the top of the lug portion 6 begins to engage between inner diverging surfaces 32B and 34B of the grid complement member. Further advancement, as shown in Figure 11, causes angular displacement of side wall portions 28 and 30.

Upon further insertion of the grid, lug 6 starts to enter lug enclosure 22, and angular displacement of the side wall portions 28 and 30 occurs along the entire length of the grid complement. In Figure 12 final advancement is illustrated with the upper shaped portions 10 and 12 of the top bar becoming engaged against shaped surfaces 24 and 26 of the grid complement, upon which displaceable side wall portions 28 and 30 revert to their normal position. Thus, self-registering surfaces 28A and 30A of the grid complement become seated against surfaces 14 and 16 of the top bar. This completes the second step of assembly of the invention.

Figure 13 illustrates the assembly thus produced and removed from the assembly apparatus.

A third step in the assembly of a positive plate of the invention is carried out by first positioning tubes T1 on the fluted slide surface W3. In order to facilitate the positioning of the tube members, the fluted slide surface W3 has fluted sections which are constructed with arcs of curvature having the same radius as the arc of curvature of the tubes T1. The tubes T1 are engaged around the lower ends of the spines 8.

Figure 14 illustrates advancement of the tubes T1 over the tube retaining parts 32 and 34 of the grid complement, during which inclined surface portions 32C and 34C provide lead surfaces to facilitate engagement. Advancement of the tubes is continued until the tube tops contact the lower ends of surfaces 28B and 30B of the grid complement. The assembly may then be removed from the apparatus and filled with active material in conventional manner.

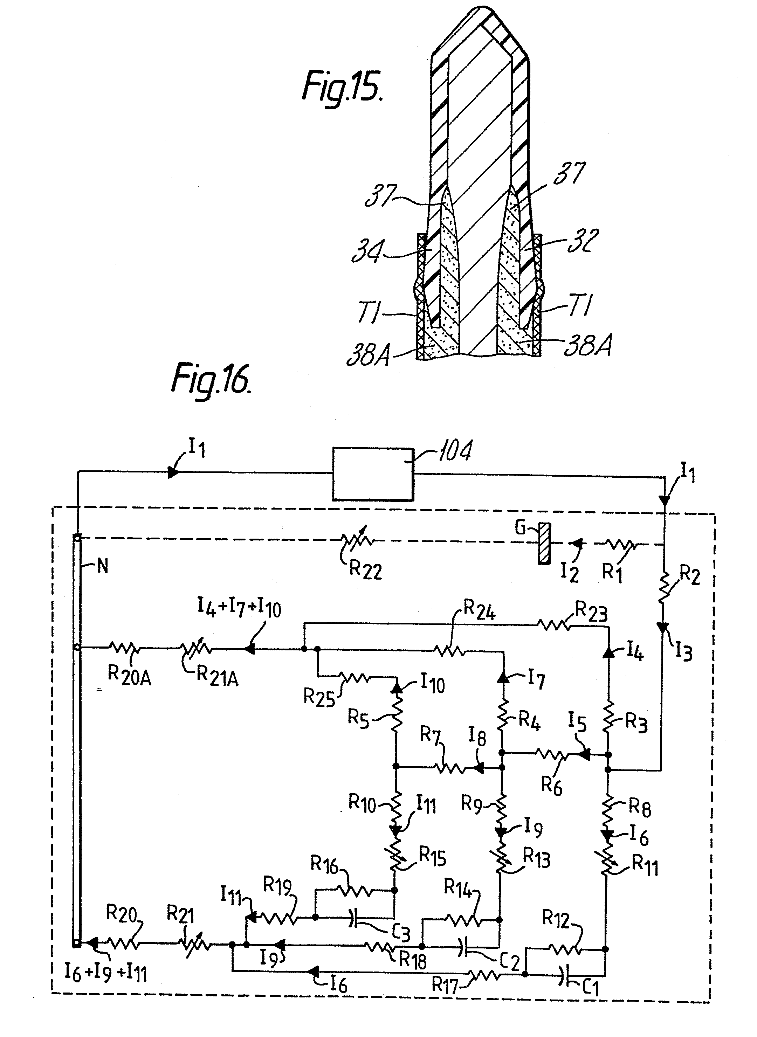

In this fully advanced position the upper ends of the tubes are maintained in a distended state by expansion forces exerted by tube retaining parts 32 and 34, as suggested in Figure 15. Active material 38A is shown received in the tubes

T1. A bottom bar L is then attached in the bottoms of the tubes T1 as indicated in Figure 2.

A portion 37 of the active material 38A may occur, as shown in Figure 15, in a space which extends above the tops of the tubes T1, and that this active material is confined by the tube retaining parts 32 and 34 of the grid complement.

The breakaway hanger portions 18 and 20 of the grid structure are received in holes 36 and 38, respectively, of the grid complement member. During electrochemical formation of the electrodes these hanger portions are utilized to provide mechanical support for the electrodes in an electrolyte bath, and provide a path for electrical flow of current to the grid structure of the electrodes. After electrochemical formation these portions 18 and 20 are broken off and discarded.

However, the thinned portions 18A and 20A, Figure 3 may remain on the grid structure protruding through respective holes 36 and 38 in the ends of the grid complement. The eutectic point of an antimony-bearing alloy is such that antimony will tend to be concentrated at surface areas of a casting molded from such an alloy, and therefore the antimony content of the thinned portions 18A and 20A remaining will not be objectionable.

A plurality of these positive electrodes are interconnected with one another as shown in Figure 1 with a lead bridge 100 extending between the upper exposed portions 6A of the lugs 6, which lead bridge 100 is fabricated from an antimony-free lead alloy.

The grid complement makes possible energy efficient methods of operating a lead-acid battery employing guided current paths. A flow of current of a required initial value is initiated in the electrodes and the electrolyte and then directed through enclosed grid portions of the positive electrode along guided paths of current flow. Other paths of flow, which bypass the active material, are restricted. Therefore, current flow is conducted substantially in its entirety through the active material in an efficient manner.

When charging a flow of current is initiated ing a battery to standard battery charging means thereby impressing a flow of current from the charging means through the positive electrodes, grid portions of which are enclosed within grid complement means which restrict unwanted current dissipation. Thereafter, this impressed flow of current is directed through the active material of the positive electrode with energy conservation being realised.

It has been determined by extensive experimentation that carrying out battery charging in such a manner inhibits undesirable current dissipation and provides energy efficient results of an unexpected nature.

This improved method of charging a battery is illustrated diagrammatically in Figure 16, wherein is shown a diagrammatic representation of an electrical circuit simulation of charging a battery cell of the invention indicating paths of current flow.

A battery charger 104 is connected to the electrical circuit simulation to impress a current flow into elements of the cell.

The cell includes negative electrode means indicated by the bus bar N, and tubular positive electrode means comprising:

    a. a grid structure including a lug, a top bar and three depending spines;

    b. three masses of positive active material substantially cylindrical in shape surrounding and in contact with respective spines;

    c. three bodies of foraminous or perforated tube material surrounding the masses of active material;

    d. foraminous separator means; and

    e. electrolyte.

The battery components listed in b, c, and d above are represented in Figure 16 by resistances. A distinction is made between "surface resistance" and "actual resistance". The term "surface resistance " as employed in the specification to define the electrical resistance of an interface between a mass of lead or active material and an electrolyte.

The term "actual resistance" defines the resistance to a flow of electrical current through a body of material, and will be dependent upon the conductivity of the said material as well as upon its cross-sectional area.

In Figure 26, the lug of the positive electrode is represented by two resistors $R_1$ and $R_2$ where $R_1$ is the "surface resistance" of the lug, and $R_2$ is the "actual resistance" of the said lug. Customarily the "surface resistance" will be quite high and the "actual resistance" quite low, since good practice involves minimization of lug surface area for a required lug cross-sectional area.

The top bar of the positive electrode is represented by five resistors, $R_3$ to $R_7$. $R_3$, $R_4$ and $R_5$ each represent the surface resistance of one-third of the top bar and $R_6$ and $R_7$ each represent the actual resistance of one-half of the top bar. Again, the ohmic value of the surface resistances may be quite high, and that of the actual resistances quite low, since good practice again calls for minimization of surface area of the top bar for a required cross-sectional area.

The actual resistances of the three depending spines are represented by resistors $R_8$, $R_9$ and $R_{10}$.

Each of the three masses of active material is represented by a combination of three elements, two resistive and one capacitive. These are resistors $R_{11}$ to $R_{16}$ and capacitors $C_1$ to $C_3$ inclusive. Resistors $R_{11}$, $R_{13}$ and $R_{15}$ represent the actual resistance of the active material masses, while capacitors $C_1$, $C_2$ and $C_3$ represent the electrochemical storage characteristics of the respective active material masses. The capacitors $C_1$, $C_2$ and $C_3$ are not true electrical analogues of this energy storage capability, since in an actual battery energy is stored in a chemical rather than in an electrical form. Current flow is shown passing through these capacitors, which, in an actual circuit model might not be the case.

Inefficiencies in the electrochemical energy storage process as well as the surface resistance of the active material mass are shown combined in resistors $R_{12}$, $R_{14}$ and $R_{16}$.

The three tubes, whose resistance to current flow is determined by their porosity, are represented by resistors $R_{17}$, $R_{18}$ and $R_{19}$. These are normally as low as possible in ohmic value.

Located between the positive electrode and the negative electrode is a separator of a foraminous nature containing an electrolyte. The actual resistance of the separator, which is governed by its porosity and is normally quite low in ohmic value, is represented by resistors $R_{20}$, $R_{20A}$, while the resistance of the electrolyte is represented by $R_{21}$, $R_{21A}$.

Above the separator means there is generally some quantity of uncontained or "free" electrolyte. The actual resistance of this free electrolyte is represented by resistor $R_{22}$.

The grid complement surrounds the positive electrode lug and portions of the grid top bar which in a conventional battery are exposed to electrolyte. That portion of the grid complement which surrounds the lug is shown diagrammatically in block form and is denoted by reference character G. Additional resistors $R_{23}$, $R_{24}$, $R_{25}$ simulate those portions of the grid complement which overlie and enclose those portions of the top bar represented by resistors $R_3$, $R_4$ and $R_5$.

Operation of the battery is conveniently described by superimposing on the circuit diagram of Figure 16 current flow paths initiated in the battery. Thus, total current from the battery charging means is indicated by the arrow $I_1$ which is superimposed at the upper right hand side of the diagram.

It is helpful first to describe the current flow paths whic occur in a conventional battery and are present in the diagram, and their relationship with respect to the various resistances.

Normally current flow $I_1$ becomes divided in the lug portion of the grid structure into two current portions $I_2$ and $I_3$. Current flow $I_2$ passes through surface resistance $R_1$ through electrolyte resistance $R_{22}$ and thence to the negative electrode.

Resistance $R_{22}$ of the electrolyte is variable, because the specific gravity of the electrolyte changes during charging, starting at a minimum and reaching a maximum at end-of-charge. Since the resistance of an electrolyte varies in an inverse relationship with specific gravity, resistance $R_{22}$ will reach a minimum at end-of-charge. $I_2$ will gradually increase, therefore, until the battery has reached a steady state.

Current component $I_3$ flows into the top bar, where it becomes divided into three components $I_4$, $I_5$ and $I_6$. Component $I_4$ flows through surface resistance $R_3$, and thence through the separator and electrolyte, represented by $R_{20A}$ and $R_{21A}$, respectively, to the negative electrode. The resistance components representing the electrolyte contained in the separator, i.e. $R_{21}$ and $R_{21A}$, are shown as variable resistors whose behaviour will be substantially the same as that of $R_{22}$. $I_4$ will thus exhibit a varying and increasing magnitude during charge until a steady state has been reached, as described with respect to $I_2$.

Current component $I_6$ flows through the spine represented by resistor $R_8$, through the active material body represented by resistor $R_{11}$, through the resistor/capacitor combination $R_{12}/C_1$ representing the energy storage reaction, through the tube wall represented by $R_{17}$, and thence through electrolyte $R_{21}$ and separator $R_{20}$ to the negative electrode. The resistor $R_{11}$ representing the active material body is variable; this illustrates in part the changing composition of the active material during charge. At the beginning of charge this composition is largely highly resistive $PbSO_4$; during charge this $PbSO_4$ becomes gradually transformed into more conductive $PbO_2$. Resistor $R_{11}$ will therefore begin at a maximum and decrease in value, reaching a minimum at end-of-charge.

The electrochemical energy storage capability of the active material is represented by capacitor $C_1$. Current $I_6$, less some losses due to inefficiencies in the charging process (these inefficiencies represented by the parallel current path through resistor $R_{12}$) flows through capacitor $C_1$ and gradually charges this element to a voltage equivalent to the power supply voltage less the voltage drops across series elements $R_2$, $R_8$, $R_{11}$, $R_{17}$, $R_{21}$ and $R_{20}$. As $C_1$ becomes charged the current flowing through this element will gradually decrease, finally substantially terminating when $C_1$ is fully charged. At this point $I_6$ will comprise only the current component flowing through $R_{12}$ and a small current component required to maintain the charge on $C_1$.

Since elements $R_{11}$ and $R_{21}$ are variable and decrease in resistance during charging, $C_1$ is charged to an increasingly higher voltage until a steady-state condition is achieved at end-of-charge.

Current component $I_5$ flows through that portion of the top bar represented by resistor $R_6$ and then becomes divided into three components $I_7$, $I_8$ and $I_9$. Component $I_7$ behaves similarly to $I_4$ while component $I_9$ behaves similarly to $I_6$, albeit in their own flow paths.

$I_8$ flows through the remainder of the top bar as represented by resistor $R_7$ whereupon, in this example, it becomes divided into two components $I_{10}$ and $I_{11}$. $I_{10}$ corresponds to $I_4$ and $I_{11}$ corresponds to $I_6$ of the foregoing discussion.

The following relationships are evident:

$$I_1 = I_2 + I_3$$

$$I_3 = I_4 + I_6 + I_7 + I_9 + I_{10} + I_{11}$$

In addition resistors $R_6$ and $R_7$ may be so low as to be considered negligable; therefore, assuming that:

$$R_8 = R_9 = R_{10}$$

$$R_{11} = R_{13} = R_{15}$$

$$R_{12} = R_{14} = R_{16}$$

$$C_1 = C_2 = C_3$$

$$R_{17} = R_{18} = R_{19}$$

it may be said that for all practical purposes

$$I_6 = I_9 = I_{11}$$

Also, assuming that:

$$R_3 = R_4 = R_5$$

it may be said that

$$I_4 = I_7 = I_{10}$$

Therefore, for this example,

$$I_3 = 3I_4 + 3I_6$$

A steady-state condition for this conventional battery must be represented by replacing various resistors $R_{22}$, $R_{21}$, $R_{11}$, $R_{13}$, $R_{15}$, $R_{21A}$ with fixed resistors. In this steady-state condition the battery charging means 104 will provide a "trickle" or maintenance current sufficient to maintain the state-of-charge of capacitors $C_1$, $C_2$ and $C_3$. All resistors are now at their fixed steady-state or minimum value, and only that current required to maintain the capacitors $C_1$, $C_2$ and $C_3$ at their fully-charged voltage flows through these capacitors. All other currents, however, continue to flow.

In this steady-state condition current components $I_2$, $I_4$, $I_7$ and $I_{10}$ provide no useful function whatsoever insofar as charging or maintaining the state of charge of the capacitors $C_1$, $C_2$ and $C_3$.

These currents will produce unwanted heating of the battery and electrolysis of the water of the electrolyte. It is therefore desirable to eliminate or substantially reduce the magnitude of these current components, both from the standpoint of energy conservation and charge efficiency as well as for a reduction in watering. This is accomplished by the use of the grid complement member as suggested in Figure 16 and operation of the invention method will now be disclosed in more detail.

Since the lug is entirely surrounded by insulating material G, no current may flow through surface resistance $R_1$ and the electrolyte $R_{22}$ to the negative electrode, and thus current $I_2$ has been eliminated. $I_3$, therefore, will be equal to $I_1$.

The exposed surfaces of the top bar are also masked by insulating material, but it may be somewhat impractical to attempt to achieve a complete masking of these surfaces. A masking of at least 99% of these surfaces, however, is readily achieved. Therefore, the ohmic value of resistors $R_{23}$, $R_{24}$ and $R_{25}$, which represent this masking, may be assumed to be at least 99 times greater than the ohmic values of the surface resistances $R_3$, $R_4$ and $R_5$, respectively. Current components $I_4$, $I_7$ and $I_{10}$ will, therefore, be reduced by at least 99% in a battery of the invention. These conditions will hold during all phases of battery operation.

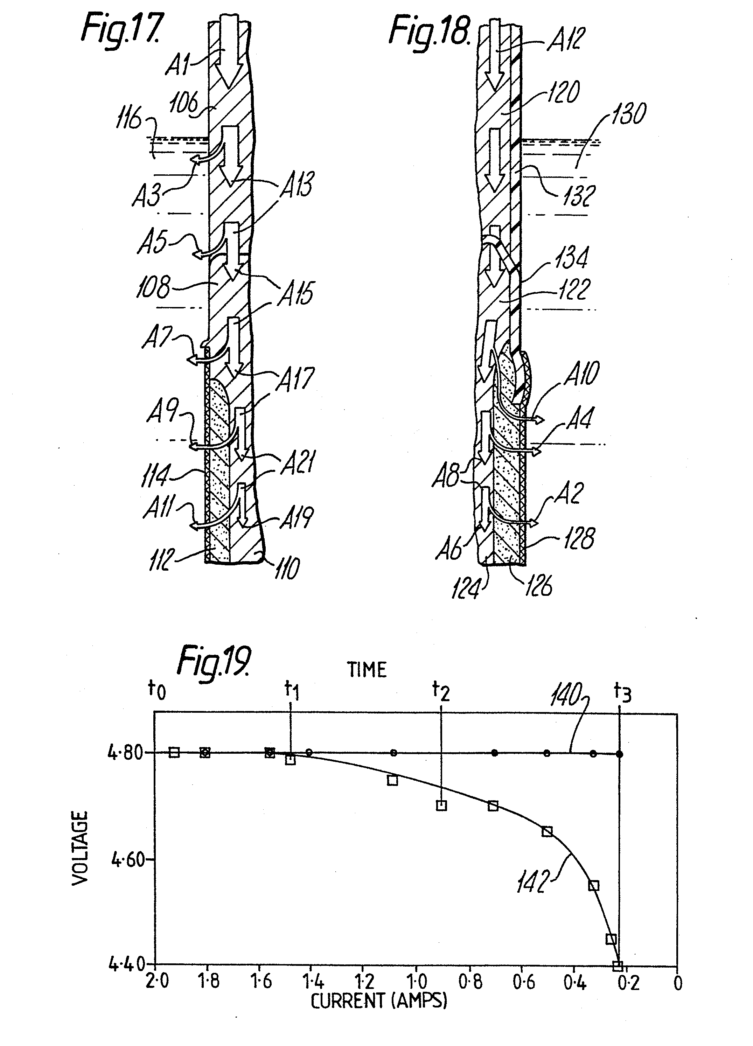

In Figures 17 and 18 normal charging current flow and the directed charging current flow of the invention, through a grid structure and positive electrode are contrasted. In Figure 17 a conventional electrode comprising a grid structure having a lug 106, a top bar 108 and depending spines 110, and further including active material 112 contained within a tube 114, is shown immersed in an electrolyte body 116. Charging current, as represented by the arrow A1, is impressed upon the electrode via the lug 106.

Upon entering the portion of the electrode which is submerged in the electrolyte 116 current A1 becomes divided, over the entire submerged surface of the electrode into several components represented diagrammatically by arrows A3, A5, A7, A9, A11. Thus current A3 will flow directly from the lug 106 into the electrolyte body, reducing continued current flow to remaining portions of the electrode to a value A13 such that

$$A13 = A1 - A3.$$

Current A13 may be said to be similar to current $I_2$ of Figure 16.

Similarly, upon entering the top bar 108, currents A5 and A7 flow directly from the top bar into the electrolyte. Thus

$$A15 = A13 - A5$$
$$A17 = A15 - A7$$

and the sum of currents A5 and A7 may be said to be similar to the sum of currents $I_4$, $I_7$ and $I_{10}$ of Figure 16.

Currents represented by arrows A9 and A11 flow through the active material 112 and thus provide a useful charging function. For any given tube of active material the sum of currents A9 and A11 may be said to be similar to currents $I_6$, $I_9$, or $I_{11}$ of Figure 16.

In Figure 18 a positive electrode of the invention comprises a grid structure having a lug 120, a top bar 122 and depending spines 124, and further includes active material 126 contained within a tube 128, and is shown immersed in an electrolyte body 130. The electrode further includes a grid complement, portions 132 and 134 of which overlie and enclose surfaces of the lug 120 and top bar 122 respectively.

In contrasting the currents of Figures 17 and 18, it is pointed out that it is desired to have currents A2 and A4 of Figure 18 equal currents A11 and A9, respectively, of Figure 17 in order to properly charge the active material 126. Thus

A6 (Figure 18) = A19 (Figure 17)

A8 (Figure 18) = A21 (Figure 17)

Since a small additional quantity of active material, 37 in Figure 15 is present in an electrode of the invention, an additional current A10 is present in the diagram of Figure 18. This current A10 may also be considered to include the very small leakage currents, as $I_4$, $I_7$, $I_{10}$ of Figure 16 present in an electrode of the invention. Charging current supplied to the electrode of Figure 18 may therefore be substantially smaller than the charging current A1 supplied to the electrode of Figure 17, such that

A12 $\sim$ A1 - A3 - A5 - A7 + A10.

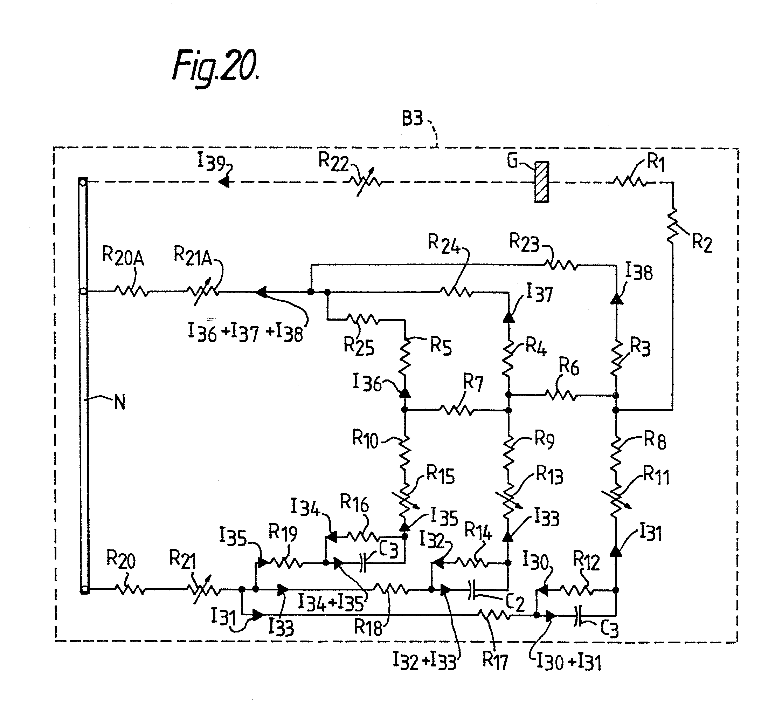

Figure 19 illustrates graphically the effect of this reduced charging current requirement in batteries undergoing a "series charge". The values shown were obtained experimentally, using 4-volt, two cell, 14 ampere-hour batteries, each cell having a single positive electrode including six tubes of active material. In conducting these tests, one such battery using a conventional positive electrode was charged in series with a similar battery of the invention in which the positive electrode included a grid complement, and charging current was continuously adjusted to maintain the battery of the invention at 4.80 volts.  Curve 140 represents the battery of the invention, while curve 142 represents the conventional battery.

Since equivalent amounts of active material were present in each battery, initially at time $t_0$ both batteries were maintained at 4.80 volts with 2.0 amperes of charging current. The two batteries remained equivalent until time $t_1$, when the conventional battery began to exhibit a decreasing voltage, indicating that more current would be required to maintain this battery at 4.80 volts.  At time $t_2$, with a charging current of 0.9 amperes required to maintain the battery of the invention at 4.80 volts, the conventional battery was only able to maintain 4.70 volts.  Similarly, at time $t_3$ when only 0.2 amperes of charging current was required to maintain the battery of the invention at 4.80 volts, the conventional battery was only able to maintain 4.40 volts.  Clearly, therefore, the battery of the invention demonstrated substantially improved charging efficiency.

The period of time represented in Figure 19 by that time which extends from that time $t_1$ through $t_3$ and beyond illustrates in part the "trickle" or maintenance charge characteristics of the two battery operations.  In particular, at time $t_3$ only 0.2 amperes of charging current was required to maintain the battery of the invention at 4.80 volts state of charge.  On the other hand, at time $t_3$ the conventional battery was only able to maintain 4.40 volts at 0.2 amperes.

Therefore, if one considers both batteries to have been fully charged at time $t_3$, the required or maintenance charge for the battery of the invention would only be 0.2 amperes.  In comparison the conventional battery would require a substantially higher current in order to maintain this 4.80 volt level.

- 17 -

Thus, it has been demonstrated that a battery of the invention requires a "trickle" or maintenance charge current which is substantially less than that required by a conventional battery.

This improved charging efficiency, in addition to conserving energy and reducing heat within the battery, may provide an additional benefit when the grid structures of the positive electrodes are fabricated from an antimony-free alloy. This may be most clearly understood with further reference to Figure 16.

Conventional tubular batteries of an antimony-free nature have heretofore been subject to a phenomenon of "barrier layer formation" which has severely limited their utility in repeated deep discharge applications. In such batteries, since no antimony is present to permeate the active material and thus insure electrical continuity between the spines and the active material of the positive electrodes, barrier layers of lead sulphate ($PbSO_4$) tend to form around the spines during deep discharge. This has the effect of greatly increasing the ohmic value of equivalent resistors $R_{11}$, $R_{13}$ and $R_{15}$. Whereas antimony would provide a current flow path through these barrier layers in a conventional battery, in an antimony-free battery it is extremely difficult to force sufficient current through these layers to transform them back into $PbO_2$. To provide sufficient current it is necessary to increase the voltage of the charging means, which in turn increases the value of current $I_2$, thus increasing electrolysis of the water of the electrolyte and corrosion of the lug, and the value of currents $I_4$, $I_7$, $I_{10}$, which also increases electrolysis and causing corrosion. Since antimony-free batteries are intended to be maintenance-free, increased electrolysis cannot be tolerated. Also, increased corrosion would decrease battery life.

In a battery of the invention current $I_2$ is substantially eliminated, and currents $I_4$, $I_7$ and $I_{10}$ are reduced to less than 1% of their corresponding value in a conventional battery. Therefore, the charging voltage may be raised to a value sufficient to force electrical current through the barrier layers of $PbSO_4$ without significantly increasing either electrolysis or corrosion.

In addition, since corrosion of the top bar and lug has been minimized in a battery of the invention, electrolytes having a higher specific gravity may be employed without shortening battery life, even at higher temperatures.

Use of a grid complement may also provide a reduced self-discharge rate as well as a more efficient operation under discharge through a load. Figure 20 illustrates a cell in a self-discharge mode; that is, the cell is neither being charged nor discharged through an electrical load.

During self-discharge, capacitors $C_1$, $C_2$ and $C_3$ will attempt to dissipate their charge. The self-discharge current may follow a variety of paths.

Considering first the capacitor $C_1$, one current path will pass through resistor $R_{12}$. This current, denoted $I_{30}$, is due primarily to the chemical propensity for $PbO_2$ to become $PbSO_4$ in the presence of $H_2SO_4$. This current also causes the "inefficiencies" in the charging process previously described in connection with $R_{12}$, $R_{14}$ and $R_{16}$. This current component is, however, quite small, and will decrease in magnitude as the charge on $C_1$ is dissipated.

A second current component, denoted $I_{31}$, flows through the active material mass $R_{11}$ and spine $R_8$ to the top bar.

Similar current flows take place with respect to capacitors $C_2$ and $C_3$. These current flows are indicated by $I_{32}$, $I_{33}$ and $I_{34}$, $I_{35}$ respectively.

Active material masses $R_{11}$, $R_{13}$ and $R_{15}$ are represented by variable resistors which will be at a minimum ohmic value at the start of the self-discharge process, will gradually increase as the $PbO_2$ of the active material becomes sulphate to $PbSO_4$, and will achieve a maximum when the charge on the capacitive elements $C_1$, $C_2$ and $C_3$ respectively has been dissipated. Current components $I_{31}$, $I_{33}$ and $I_{35}$ will, therefore, decrease in magnitude both due to charge dissipation

-19-

and the increase in $R_{11}$, $R_{13}$ and $R_{15}$, respectively, as well as for other reasons, e.g. changes in electrolyte resistances $R_{22}$, $R_{21}$, $R_{21A}$.

Upon reaching the top bar currents $I_{31}$, $I_{33}$ and $I_{35}$ may be considered to be added together and then redistributed into four components, $I_{36}$, $I_{37}$, $I_{38}$ and $I_{39}$, such that

$$I_{31} + I_{33} + I_{35} = I_{36} + I_{37} + I_{38} + I_{39}.$$

In a conventional battery current component $I_{39}$ flows through the lug $R_2$, surface resistance $R_1$ and electrolyte resistance $R_{22}$ to the negative electrode means. It is pointed out that electrolyte resistance $R_{22}$ is variable due to the changing specific gravity of the free electrolyte; its ohmic resistance will gradually increase during the self-discharging process, thus decreasing the value of current component $I_{39}$.

Since top bar resistance $R_6$ and $R_7$ are extremely small, $I_{36}$, $I_{37}$ and $I_{38}$ may be considered to be substantially equal in value. These components flow through top bar surface resistances $R_5$, $R_4$ and $R_3$, respectively, through separator resistance $R_{20A}$ and variable electrolyte means $R_{21A}$ to the negative electrode. It is pointed out that the behaviour of $R_{21A}$ will be substantially similar to that exhibited by $R_{22}$.

Current components $I_{36}$, $I_{37}$, $I_{38}$ and $I_{39}$ are combined in the negative electrode and then pass through separator resistance $R_{20}$ and variable electrolyte resistance $R_{21}$, being redistributed into the three components $I_{31}$, $I_{33}$ and $I_{35}$ as shown.

The total self-discharge rate may be substantially reduced by the use of a grid complement member, represented by insulator G and resistors $R_{23}$, $R_{24}$ and $R_{25}$ as shown in Figure 20. These elements are the same as those introduced in Figure 16.

Current component $I_{39}$ is totally eliminated by the insulating material G surrounding the lug. Current components $I_{36}$, $I_{37}$ and $I_{38}$ will be reduced to no more than 1% of their previous value by the masking effect of the grid complement, represented by resistors $R_{23}$, $R_{24}$ and $R_{25}$ respectively, on the

surface of the top bar. Self-discharge, therefore, will be reduced to a value equal to or less than $I_{30} + I_{32} + I_{33} + (I_{31} + I_{34} + I_{35})$ $(.01)$ with respect to the values seen in a conventional battery. It will be noted that, in Figure 20, for a battery of the invention, $I_{31} = I_{38}$, $I_{33} = I_{37}$, $I_{35} = I_{36}$.

Since the self-discharge rate has been reduced a battery of the invention which is in a charged state will provide substantially extended shelf life during which the state of charge is appreciably maintained.

A similar increase in efficiency may be noted while operating a battery of the invention during a discharge mode through an electrical load.

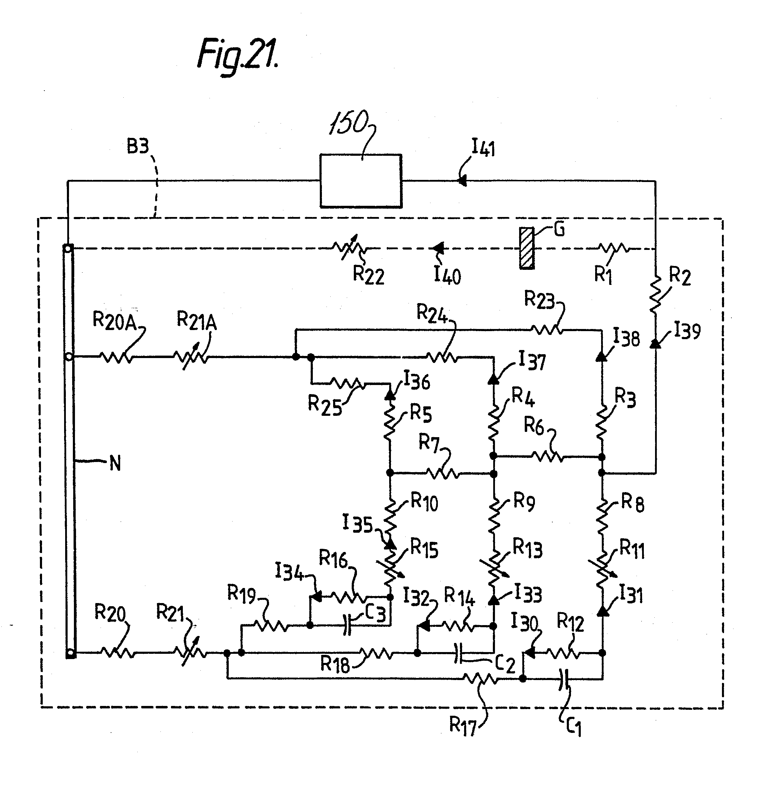

Referring to Figure 21, component characteristics duplicate those of Figure 20. An electrical load 150 has been added, however, and thus the magnitude of certain current components have been dramatically increased.

The ohmic resistance of a load will generally be quite low in comparison to the self-discharge current paths within the battery, so the majority of current flow will be through the load. In Figure 21 this current flow through the load is represented by current component $I_{41}$. Current component $I_{39}$ becomes divided into two components at the lug, one being this load current $I_{41}$ and the other, $I_{40}$, being the self-discharge current component through surface resistance $R_1$ and electrolyte resistance $R_{22}$. The magnitudes of current components $I_{31}$, $I_{33}$, $I_{35}$ and $I_{39}$ will, therefore, be several times greater than they were in Figure 20 because of this additional current requirement. Electrical energy is still wasted, however, along flow paths $I_{30}$, $I_{32}$, $I_{34}$, $I_{36}$, $I_{37}$, $I_{38}$ and $I_{40}$, as was the case in Figure 20. The total energy wasted may be somewhat less, however, since the dissipation of the charge on capacitors $C_1$, $C_2$ and $C_3$ as well as the increases in variable resistors $R_{11}$, $R_{13}$, $R_{15}$, $R_{21}$, $R_{22}$, $R_{21A}$ will be much more rapid.

Thus, it will be seen that addition of a grid complement member, such as that disclosed, will eliminate the current path $I_{40}$ through $R_1$, and will also dramatically reduce flow

paths $I_{36}$, $I_{37}$ and $I_{38}$. This, in turn, will provide for an increased efficiency of operation during discharge by sharply reducing wasted electrical energy.

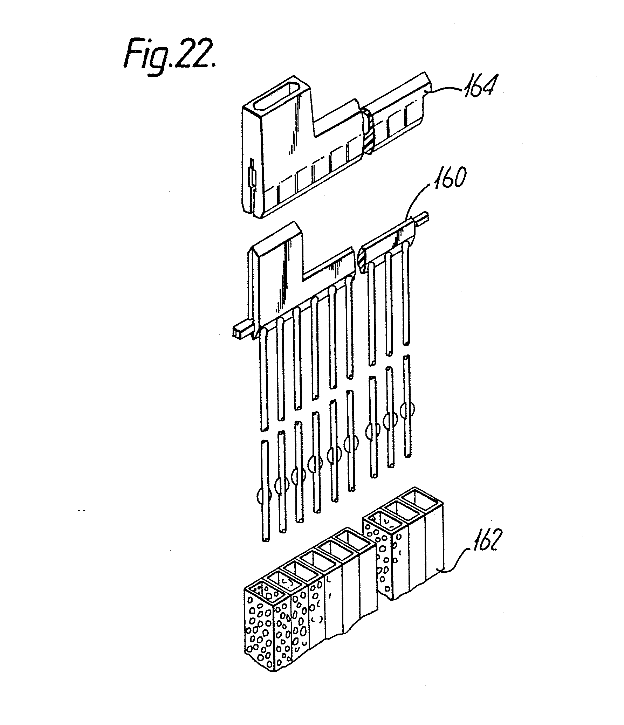

It may be desired to manufacture batteries of the invention having tube means of some cross-sectional configuration other than round. This may be easily accomplished by varying the tube shape and the shape of the tube engaging parts of the grid complement means. Figure 22 illustrates such a modification in exploded form, comprising a grid 160, substantially the same as that of Figure 3, tube means 162 of square cross-section and corresponding grid complement means 164.

Claims:

1. A tubular positive electrode for use in a lead-acid storage battery, including a grid structure consisting of a top bar (4), a lug portion (6) extending from one side of the top bar and spaced-apart spine portions (8) extending from an opposite side thereof, tubes (T1) locating active material around the spines, and a plastic grid complement (G1) selectively enclosing portions of the grid structure, characterised in that the top bar (4) has shaped spaced-apart surfaces of a predetermined configuration, and the grid complement is formed with spaced-apart angularly displaceable side portions (28, 30) which are selectively self-registering with the predetermined shaped surfaces (10, 12, 14, 16) of the grid structure when the grid complement (G1) is assembled on the top bar (4).

2. An electrode as claimed in Claim 1, characterised in that the spaced apart angularly displaceable side portions (28,30) of the grid complement are formed integrally with the portion of the grid complement which encloses the top bar.

3. An electrode as claimed in Claim 1, characterised in that the angularly displaceable side portions (28, 30) present spaced apart sections (28A, 30A) which are selectively self-registering with those portions of the top bar (4) which lie between the said spines (8).

4. An electrode as claimed in Claim 1, characterised in that the spaced apart angularly displaceable side portions (28, 30) are extended to present a plurality of spaced apart tube engaging portions (32A, 34A).

5. An electrode as claimed in Claim 4, characterised in that the tube engaging portions (32A, 34A) are received within the tubes (T1) and maintain the tops of the tubes in a distended state.

6.    An electrode as claimed in Claim 5, characterised in that the space defined by the tube engaging portions (32A, 34A) in their registered position exceed in size the enclosed portion of the spines, and active material is received in the space lying between the tube engaging portions (32A, 34A) and the spines (8).

7.    An electrode as claimed in Claim 6, characterised in that said space contains active material in contact with the top bar (4) and spines (8) at points above the engaged portions of the tubes (T1).

8.    An electrode according to any one of Claims 1 to 7, characterised in that the spines are tapered to provide cross-sectional areas which increase as they merge with the shaped surfaces (14, 16) of the top bar, thereby to provide an increased current carrying mass and improved resistance to corrosion.

9.    A method of assembling a tubular positive plate according to any one of Claims 1 to 8, characterised by first inserting the lug (6) of the grid structure into the lug enclosure portion (22) of the grid complement with initial angular displacement of the side portions (28, 30) occuring, thereafter advancing the said grid structure into the grid complement to further angularly displace the said side wall portions, then advancing and engaging the top bar (4) against the top bar enclosure (23) into a position in which the said angularly displaceable side portions (28, 30) revert into self-registering relationship with the shaped portions of the top bar lying between the spines (8), thereafter distensibly fitting the tube means (T1) over the outer sides of the tube engaging surfaces (32A, 34A), and finally advancing the tube means (T1) into contact with the side portions (28, 30) of the grid complement.

10. A lead-acid storage battery having tubular positive electrodes according to any one of Claims 1 to 8, separated from negative electrodes by separators.

11. A method of operating a lead-acid battery according to Claim 10, in which active material is located around the current carrying means within the tubes (T1) and the grid complement member (G1), characterised in that an electrical current of a required initial value is first caused to flow through the electrodes, separators and electrolyte, and the current is then directed through enclosed grid portions of the positive electrode along guided paths of travel in which current flow along paths which bypass the positive active material is restricted, and thereafter the flow of current, the value of which may vary, is conducted through the active material of the positive electrode in an energy conserving manner.

12. A method according to Claim 11, in which portions of the electrical current flow through active material located at points appreciably above the upper ends of the tubes.

13. A method according to Claim 11, in which the battery is in a charging mode and the current carrying means is of the antimony-free class having a top bar and spaced apart spines, the said current being established at an initial value which is operable to electrochemically transform barrier layers of $PbSO_4$, which may be present around the spines, into $PbO_2$.

14. A method according to Claim 11, in which the battery is neither being charged nor discharged through a load and the battery is self-discharging through paths of current flow which are restricted to inhibit the magnitude of the said current flow and thus extend the shelf life of the said battery.

15. A tubular positive electrode for use in a lead-acid storage battery, substantially as herein described with reference to the accompanying drawings.

-25-

Fig.1.

2/10                    0089427

Fig.2.

Fig.3.

Fig.4.

Fig.5.

Fig.6.

Fig.7.

Fig.8.

Fig. 9.

Fig.10.

Fig.11.

Fig.12.

Fig.13.

Fig.14.

Fig.15.

37  37
34  32
TI  TI
38A  38A

Fig.16.

$I_1$  104  $I_1$

N  $R_{22}$  G  $I_2$  $R_1$  $R_2$

$I_3$

$I_4+I_7+I_{10}$  $R_{24}$  $R_{23}$

$R_{20A}$  $R_{21A}$  $R_{25}$  $I_{10}$  $I_7$  $I_4$

$R_5$  $R_7$  $I_8$  $R_4$  $I_5$  $R_3$

$R_6$

$R_{10}$  $I_{11}$  $R_9$  $I_9$  $R_8$  $I_6$

$R_{15}$  $R_{13}$  $R_{11}$

$R_{16}$

$I_{11}$  $R_{19}$  $R_{14}$  $R_{12}$

$C_3$

$R_{20}$  $R_{21}$  $I_9$  $R_{18}$  $C_2$

$I_6+I_9+I_{11}$  $I_6$  $R_{17}$  $C_1$

*Fig.17.*

A1
106
116
A3
A13
A5
108
A15
A7
A17
A9
A21
114
A11
A19
112
110

*Fig.18.*

A12
120
130
132
134
122
A10
A4
A8
A2
A6
128
124
126

*Fig.19.*

TIME

t0  t1  t2  140  t3

VOLTAGE

4·80

4·60

142

4·40

2·0  1·8  1·6  1·4  1·2  1·0  0·8  0·6  0·4  0·2  0

CURRENT (AMPS)

Fig.20.

8/10

0089427

0089427

Fig.21.

## Fig.22.

# European Patent Office

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| A | EP-A-0 009 972 (KOEHLER MANUF. COMP.)<br><br>* figures 4,7,9,10A,12,12A,18,19,20-24,26,30-39; claims 1,2,4,8,10,19,20,21,22,27; page 13, lines 2-13; page 15, line 21 - page 18, line 9; page 19, lines 20-37; page 20, line 27 - page 21, line 2; page 23, lines 14-21; page 29, lines 14-32; page 32, lines 1-17; page 25, line 31 - page 28, line 5 * | 1-6,9-11,14,15 | H 01 M 4/76 |
| A | GB-A-1 428 978 (ELECTRIC POWER STORAGE)<br>* claim 1; figures 1,2 * | 8 | |
| A | GB-A- 896 654 (AKTIEBOLAGET TUDOR)<br>* figures 1,5; claims 1,2 * | 8 | TECHNICAL FIELDS SEARCHED (Int. Cl. ³)<br><br>H 01 M 4/76 |
| A | US-A-4 303 746 (J.E. GULLIKSEN)<br><br>* figure 11, column 5, lines 45-52; claim 2 * | 1-4,5,6,10,15 | |

The present search report has been drawn up for all claims

| Place of search<br>THE HAGUE | Date of completion of the search<br>30-06-1982 | Examiner<br>D'HONDT J.W. |
|---|---|---|